# EUROPEAN PATENT APPLICATION

(11) **EP 1 708 507 A2**
(43) Date of publication of application: **04.10.2006**
(21) Application number: 06251659.6
(22) Date of filing: 28.03.2006
(51) Int. Cl.: H04N 7/24

(54) **Image display device and method thereof**

(30) Priority: 31.03.2005 KR 20050027261
(71) Applicant: LG Electronics Inc., Yongdungpo-gu Seoul (KR)
(72) Inventor: Yoo, Hee Tae, Book-gu Daegu-si (KR)
(74) Representative: Camp, Ronald

(57) **Abstract**

An image display device comprises: a tuner for selecting a broadcast signal; a demux for separating a video signal, an audio signal and an additional signal from a broadcast signal selected by the tuner; an up/down scaler with a resolution selected by the user; a display unit for displaying a video signal scaled in the up/down scaler; a key input unit receiving an user command; and a controller controlling the up/down scaler so that the resolution of the video signal displayed is in accordance with user commands.

## Description

The present invention relates to an image display device and an image display method. It more particularly relates to an image display device displaying an image in compliance with a resolution selected by a user and an image display method.

A current television technology, standard definition television (SDTV), was developed in the mid-twentieth century based on an analog standard of technology. The disadvantage of SDTV broadcasting is that the amount of information that the user can watch is limited.

In order to overcome this disadvantage, digital TV technology, high definition television (HDTV), has been designed to digitize and compress a TV signal before the signal is transmitted, and therefore HDTV can transmit more data than SDTV.

One major advantage of HDTV over SDTV is that, because HDTV can transmit more data than SDTV, HDTV can transmit high-resolution images.

For example, examples of SD formats used in SDTV include frame sizes of 720*480, 704*480 and 640*480, and HD formats used in HDTV include frame sizes of 1920*1080 and 1280*720.

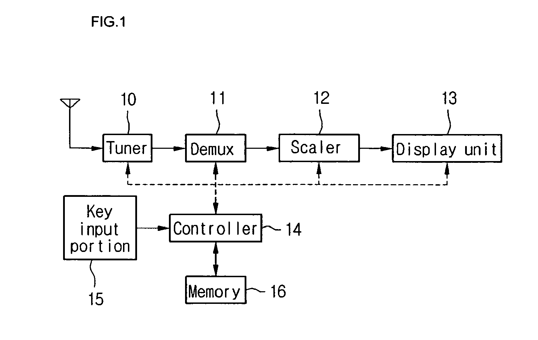

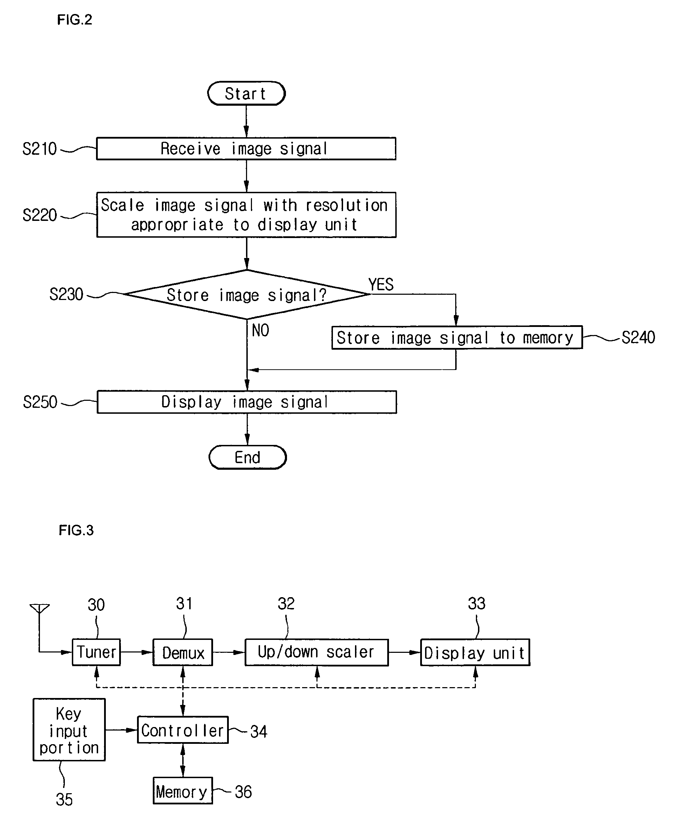

Fig. 1 is a block diagram showing a conventional image display device, and Fig. 2 is a flow chart describing a method for displaying an image signal in a conventional image display device.

As shown in Fig. 1, a conventional image display device consists of a tuner 10 that selects a received broadcast signal, a demux that separates a video signal, a voice signal and additional information from the broadcast signal selected in the tuner 10, a scaler 12 that finds a resolution of a video signal resolution in the demux 11 and scales it to be appropriate to the display unit 13, a key input portion 15 that inputs a user command, a controller 14 that controls the tuner 10, the demux 11, scaler 12 and the display unit 13 in compliance with the user commands in key input portion 15 and a memory 16 storing a broadcast signal.

The conventional display device is configured to display only broadcast signals with a specific resolution in compliance with its capabilities, and the video signal of an SD format may be displayed, but the video signal of an HD format is not able to be displayed.

In addition, as shown in Fig. 1, an image display device may have a function for scaling an image signal to be appropriate to the resolution (SD format) of the display unit 13 and down-scaling an image signal of an HD format to display it with the resolution of an SD format.

Fig. 2 is a flow chart describing an image display method of a conventional image display device.

The conventional image display device scales an image signal with a resolution appropriate to a display unit when the image signal is received. (S210) (S220)

If a user commands the storing of an image signal, the image signal, which is scaled to a specific resolution, is stored in the memory, and the image signal is displayed by the display unit. (S230) (S240) (S250)

If there is no user command for storing an image signal, the image signal, scaled to a specific resolution, is displayed by the display unit. (S230) (S250)

The conventional image display described above does not provide a method for storing or displaying an image signal with a resolution selected by a user.

In other words, a user can not display or store a broadcast signal with a resolution desired by the user. Generally, the image signal resolution is determined to be displayed or stored in compliance with capabilities of an image display device. Thus, it is difficult to satisfy the requests of a user.

For example, in the case of movies or soap operas, the resolution of the image signal is important in view of the type of broadcast program, and in the case of news or sports, transmitting the content is more important than the resolution of the image signal.

Accordingly, if a user can select the resolution of image signal to be stored or displayed, it is possible to provide better satisfaction to the user.

The present invention seeks to provide improved image display devices and methods.

In accordance with an aspect of the present invention an image display device comprises: a tuner arranged to select a broadcast signal; a demux arranged to separate a video signal, an audio signal and an additional signal from the broadcast signal selected by the tuner; an up/down scaler arranged to scale a video signal separated from the demux in compliance with a resolution selected by the user; a display unit arranged to display an image signal scaled in the up/down scaler; a key input unit arranged to receive a user command; and a controller arranged to control the up/down scaler so that the resolution of the displayed video signal is in compliance with the user's command request.

In accordance with another aspect of the invention, an image display method comprises: inputting a video signal; determining the resolution of the video signal; scaling the video signal with a resolution selected by the user; and displaying the scaled video signal.

In accordance with another aspect of the invention, an image display method comprises: selecting and receiving a broadcast signal; separating a video signal from the broadcast signal; determining the resolution of the video signal; scaling and storing the image signal with a first resolution selected by the user; and scaling and displaying the stored image signal with a second resolution selected by the user.

Embodiments of the invention will now be described by way of non-limiting example only, with reference to the drawings, in which:

Fig. 1 is a block diagram describing a conventional image display device;

Fig. 2 is a flow chart describing a method for displaying an video signal in a conventional image display device;

Fig. 3 is a block diagram describing a configuration of an image display device in accordance with the present invention;

Fig. 4 is a block diagram describing embodiment of an up/down scaler in an image display device in compliance with the present invention; and

Fig. 5 is a flow chart describing an image display method in accordance with the present invention.

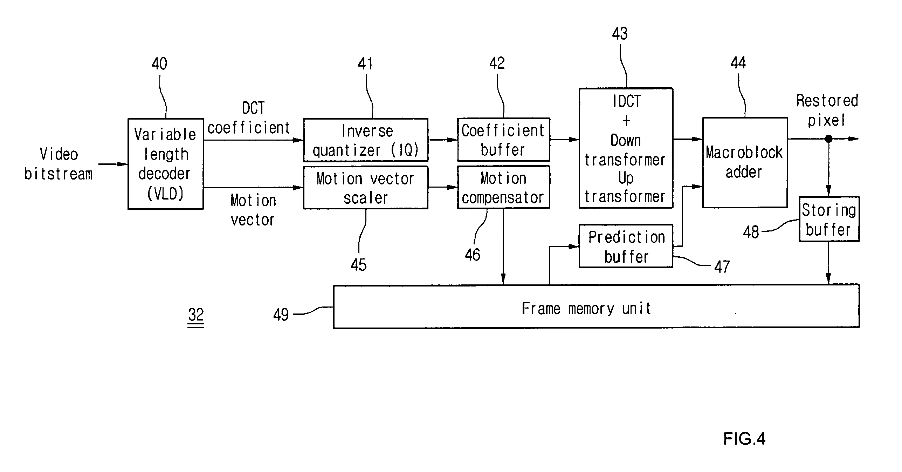

Referring to Fig. 3, an image display device includes a tuner 30, a demux 31, an up/down scaler 32, a display unit 33, a key input portion 35, a controller 34 and a memory 36.

The tuner 30 selects a broadcast signal selected by a user, and the demux 31 splits the broadcast signal selected in the tuner 30 into a video signal, an audio signal and an additional signal.

The key input portion 35 receives user commands, which may for example include a channel tuning command, a resolution setting command of a user, a storing command of a broadcast signal and a broadcast display command.

The memory 36 allows the user to set a resolution or store a broadcast signal.

The up/down scaler 32 up-scales or downscales the resolution of the video signal separated from the demux 31. In other words, the resolution of the video signal is changed in compliance with a command from the controller 34 with reference to the resolution set by the user.

The display unit 33 displays a video signal scaled in the up/down scaler 32 or displays a video signal scaled in the up/down scaler 32, which is stored in the memory 36.

An image display device configured as above receives a broadcast signal of a channel selected by the user through the tuner 30 if a power-on command is input by the key input portion 35, and the demux 31 divides the received broadcast signal into a video signal, an audio signal the additional information.

The controller 34 extracts the information related to the resolution of the video signal from the broadcast signal. The information related to the resolution of the video signal may for example be obtained through the additional information.

In this embodiment a user executes an on Screen Display (OSD) menu through the key input portion 35 to select the resolution of the video signal by the OSD menu and can be set to display with different resolutions by channels or types of broadcast program.

Note that the channel information and the information type of a broadcast program can be obtained via the additional information.

If the resolution of the received video signal is in a SD format, it can be changed to a HD format to be stored in the memory 36.

In addition, if the resolution of the received video signal is a HD format, it can be changed to an SD format to be stored in the memory 36. In this case, the video signal stored in the memory 36 is in a compressed form.

Similarly, a video signal stored in the memory 36 may be displayed in accordance with a user-defined resolution.

For example, the video in a HD (High Definition) format can be down-scaled to a SD (Standard Definition) format to be stored in the memory 36, and a video signal in a SD format, which is stored in the memory 36 can be up-scaled to a HD format to be displayed.

The change of a resolution in a video signal described above is set by the user.

Note that the down-scaling is not limited to scaling a video signal of HD format to an image signal of SD format. For example, among video signals in a HD format, a 1920*1080 frame may scale to a 1280*720 frame.

Similarly, the up-scaling is not limited to scaling a video signal of SD format to a video signal in a HD format. For example, among a video signal in a HD format, a 1280*720 frame may scale to a 1920*1080 frame.

Referring to Fig. 4, the up/down scaler 32 includes: a variable length decoder VLD 40 analyzing an input compressed bit-stream, an inverse quantizer IQ 41 quantizing inversely the compressed bit-stream, which is analyzed by the VLD 40 and transformed to produce a DCT coefficient, an inverse discrete cosine transformer IDCT 43 inversely cosine transforming after temporarily storing a bit-stream in a coefficient buffer 42, which is output in a macroblock type by the inverse quantizer 41, a motion compensator MC 46 producing a motion compensated pixel value using a motion vector scaled from the motion vector scaler 45, a macroblock adder 44 adding a data output from the inverse discrete cosine transformer 43 and a data extracted by a control signal of the macroblock, and finally a frame memory unit 49 storing a picture data output from the macroblock adder 44 and extracting the corresponding data by a macroblock control signal.

Here, a motion compensated pixel value extracted in the frame memory unit 49 is temporarily stored in accordance with a control signal of a macroblock to input to the macroblock adder 44 the data output from the inverse discrete cosine transformer 43, and the data output from the macroblock adder 44 is temporarily stored in the storing buffer 48 and then stored in the frame memory unit 49.

The inverse discrete cosine transformer 43 includes a down transformer and an up transformer.

The down transformer and the up transformer directly transform the resolution of a video image signal in the frequency domain.

Specifically, the inverse quantizer transforms a DCT coefficient in order to up-scale or down-scale the resolution of a video signal, and a DCT coefficient inversely cosine transforms to obtain a difference pixel value. A motion vector output from the variable length decoder 40 is scaled in the motion vector pertinent to the block region transformed in the inverse quantizer 41, and a motion compensated value is obtained in the motion compensator unit 46.

Moreover, the macro adder 44 adds a difference pixel value in a macroblock unit obtained from the inverse cosine transformer 43 and a motion compensating value of the pixel obtained in the motion compensator 46 to calculate a final pixel value and then store it in the frame memory 49.

As described above, the up/down scaler 32 shown in Fig. 4 up/down scales a video signal separated in the demux 31 by controls of a control unit 34 in Fig. 3

In the meantime, information about the resolution set by a user is stored in the memory 36, and the controller 34 controls the up/down scaler 32 with reference to the resolution information stored in the memory 36.

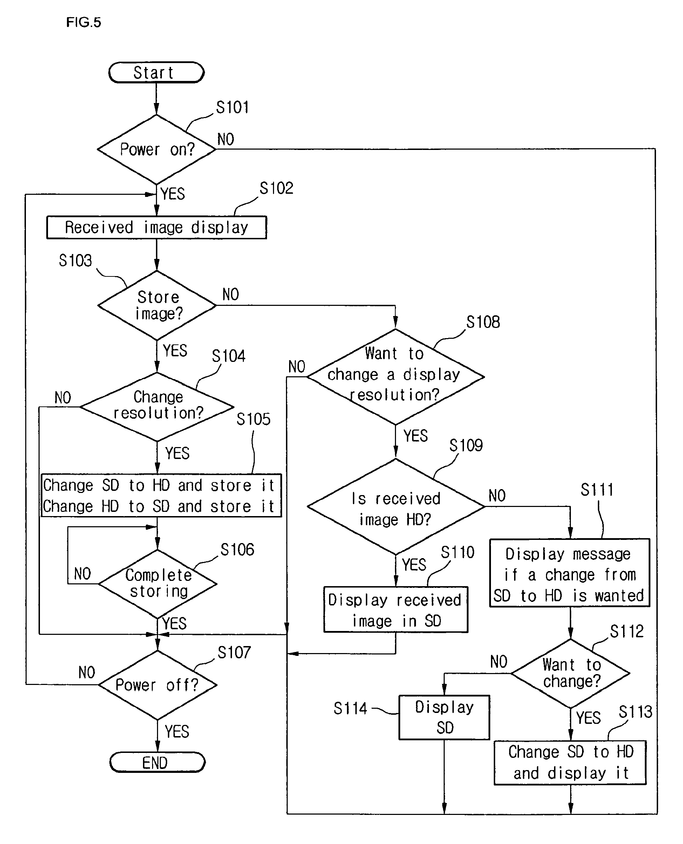

Referring now to the flow chart of Fig. 5, firstly, if a user inputs a power-on command, the video signal received will be displayed. (S101) (S102)

It is then determined whether the received video signal should be stored or not. Note that determining whether to store the video signal can be decided by a predetermined recording set by a user in advance or can be determined by a user decision in real time.

Next, if a user wants to store the video signal, the user is asked if it is desired to change the resolution of the video signal to store the video signal. (S104)

If a user wants to store the changed resolution of the video signal in SD format, this signal needs to be converted to a HD format, and then the resolution must be stored. If the received video signal is in a HD format, the signal needs to be converted to a SD format, and then the resolution must be stored. (S105) However, resolution does not have to be converted only from a HD format to an SD format, and vice versa, it can be customized in compliance with a user preference. For example, regardless of whether the video signal is in a HD format or in a SD format, a user can store in a 720*480 frame.

Next, it is determined if storing is done.

If storing is done, and a user inputs a power-off command, then the process terminates, and if not, then the process returns to step S102.(S107)

In the meantime, when displaying the received video signal, the resolution of a video signal is changed to determine whether to display or not.

If a user wants to change the video display quality, it is determined whether the received video is in a HD format. (S109)

According to the determination results, (S109) if the video signal is in a HD format, the signal is converted to an SD format to be displayed (S110).

Meanwhile, if the video signal is in a SD format, the video signal can be converted to a HD format to be displayed (S111). Accordingly, if a user wants to change format, a video signal in a SD format is converted to a HD format to be displayed. (S112) (S113)

In addition, if a user does not want to change a video signal, then the signal is in a SD format (S114).

Note that a change of a resolution of the video signal is limited to one embodiment; it is possible to change the resolution of a video image in accordance with a user's preference.

For example, in case that the video signal stored in a memory as well as the received video signals are displayed, it is possible to change the resolution of the video signal. In other words, the user can store or display a video signal in accordance with a selected resolution, and can store a video signal in accordance with the selected resolution and display the stored image signal in accordance with the stored image signal.

An image display device and a method for displaying a video can store or display a video signal in accordance with the resolution selected by a user preference, and the stored video signal can be displayed in accordance with the selected resolution.

The described embodiments are given by way of example only. The skilled person will be aware of various modifications which may be made within the scope of the invention as claimed.

## Claims

1. An image display device comprising:
a tuner arranged to select a broadcast signal;
a demux arranged to separate a broadcast signal selected by the tuner into a video signal, an audio signal and an additional signal;
an up/down scaler arranged to scale the video signal separated from the demux in accordance with a resolution selected by the user;
a display unit arranged to display the video signal scaled in the up/down scaler;
a key input unit receiving a user command; and
a controller arranged to control the up/down scaler so that the resolution of the displayed video signal is in accordance with the user's command request.

2. The image display device of claim 1, further comprising;
a memory arranged to store a resolution set by a user preference.

3. The image display device of claim 2, wherein the memory is arranged to store a video signal scaled in accordance with the resolution selected by the user.

4. The image display device of claim 1, wherein the resolution is determined by a user's channel or program preference, or in accordance with information extracted from additional information separated from the broadcast signal.

5. The image display device of claim 1, wherein the up/down scaler comprises:
a variable length decoder VLD 40 arranged to analyze an input compressed bit-stream;
an inverse quantizer arranged to quantize inversely the compressed bit-stream which is analyzed by the variable length decoder, and to transform a DCT coefficient;
an inverse discrete cosine transformer arranged to inversely cosine transform after temporarily storing a bit-stream in a coefficient buffer, which is arranged to be output in a macroblock type by the inverse quantizer;
a motion compensator arranged to produce a motion compensated pixel value using a motion vector scaled from the motion vector scaler;
a macroblock adder arranged to add a data output from the inverse discrete cosine transformer and data extracted by a control signal of the macroblock;
a frame memory unit arranged to store picture data output in the macroblock adder and to extract the corresponding data by the macroblock control signal.

6. An image display method comprising:
inputting a video signal;
determining the resolution of the video signal;
scaling the video signal with a resolution selected by the user; and displaying the scaled video signal.

7. The image display method of claim 8, wherein the input video signal is stored in a memory in accordance with a resolution selected by the user.

8. The image display method of claim 6, wherein the resolution of the video signal is extracted from the additional information received with the video signal.

9. The image display method of claim 6, wherein the resolution selected by the user is determined by the type of video signal, or in accordance with the channel receiving the video signal.

10. The image display method of claim 6, wherein an image signal scaling is performed by an up-scaling or a down-scaling in accordance with a resolution selected by the user.

11. An image display method comprising:
selecting and receiving a broadcast signal;
separating a video signal from the broadcast signal;
determining the resolution of the video signal;
scaling and storing the video signal with the first resolution selected by the user; and scaling and displaying the stored video signal with the second resolution selected by the user.

12. The method of claim 11, wherein the first resolution is a SDTV format, and the second resolution is a HDTV format.

13. The method of claim 11, wherein the resolution of the video signal is extracted from additional information received with the video signal.

14. The method of claim 11, wherein the first resolution or the second resolution is selected by the genre of the video signal.

15. The method of claim 11, wherein the first resolution or the second resolution selected by the user is determined by the received channel.
